# EUROPEAN PATENT APPLICATION

(11) **EP 4 736 807 A1**
(43) Date of publication of application: **06.05.2026**
(21) Application number: 24850432.6
(22) Date of filing: 05.01.2024
(51) Int. Cl.: A61C 7/00, G06T 7/00, G06T 19/20

(54) **METHOD FOR GENERATING DIGITAL DATA SET REPRESENTING TARGET TOOTH ARRANGEMENT**

(30) Priority: 07.08.2023 CN 202310989230
(71) Applicant: Hangzhou Chohotech Co., Ltd., Hangzhou, Zhejiang 310023 (CN)
(72) Inventor: WU, Huikai, Hangzhou, Zhejiang 310023 (CN); YU, Wenke, Hangzhou, Zhejiang 310023 (CN)
(74) Representative: Gille Hrabal Partnerschaftsgesellschaft mbB Patentanwälte
(86) International application number: PCT/CN2024/070708
(87) International publication number: WO 2025/030772

(57) **Abstract**

One aspect of the present application provides a computer implemented method for generating a target position(s) in a selected direction(s) of a selected tooth/teeth, the method comprises: obtaining a first 3D digital model representing a patient's maxillary and mandibular dentitions under an initial tooth arrangement; obtaining a lateral cephalometric radiograph of the patient; registering the first 3D digital model with the lateral cephalometric radiograph; predicting a target position(s) in a selected direction(s) of a selected tooth/teeth of a first dentition in the lateral cephalometric radiograph using a trained first deep neural network, where the first dentition is the maxillary dentition or the mandibular dentition; and generating a target position(s) in the selected direction(s) of the selected tooth/teeth of the first dentition in the first 3D digital model based on the target position(s) in the selected direction(s) of the selected tooth/teeth of the first dentition in the lateral cephalometric radiograph and the registration result.

## Description

### FIELD OF THE APPLICATION

The present application generally relates to a method for generating a digital data set representing a target tooth arrangement using a deep learning neural network based on predetermined constraints.

### BACKGROUND

With rapid development of computer technologies, dental diagnosis and treatment increasingly rely on computer technologies. In the making of an orthodontic treatment plan, a 3D digital model representing a dentition under a target tooth arrangement is usually generated based on a 3D digital model representing the dentition under an initial tooth arrangement.

At present, there are mainly two methods for generating a 3D digital model representing a dentition under a target tooth arrangement based on a 3D digital model representing the dentition under an initial tooth arrangement. One method is aligning teeth according to pre-formulated rules which generally derive from dentists' experiences. The Inventors of the present application discover that since shapes and poses (positions and orientations) of teeth of different patients vary greatly, it is very difficult to formulate a set of rules suitable for various situations. Therefore, this method has significant limitations. The other method is based on deep learning, for example, train a deep neural network with a training data set (comprising a plurality of sets of 3D digital models, each set of 3D digital models includes a 3D digital model representing a dentition under an initial tooth arrangement and a 3D digital model representing the dentition under a target tooth arrangement), and align teeth using the trained deep neutral network. The Inventors of the present application discover that results generated by this method might not comply with clinical medical requirements due to lack of constraints.

Therefore, it is necessary to provide a new method for generating a digital data set representing a target tooth arrangement.

### SUMMARY

In one aspect, the present application provides a computer implemented method for generating a target position(s) in a selected direction(s) of a selected tooth/teeth, the method comprises: obtaining a first 3D digital model representing a patient's maxillary and mandibular dentitions under an initial tooth arrangement; obtaining a lateral cephalometric radiograph of the patient; registering the first 3D digital model with the lateral cephalometric radiograph; predicting a target position(s) in a selected direction(s) of a selected tooth/teeth of a first dentition in the lateral cephalometric radiograph using a trained first deep neural network, where the first dentition is the maxillary dentition or the mandibular dentition; and generating a target position(s) in the selected direction(s) of the selected tooth/teeth of the first dentition of the first 3D digital model based on the target position(s) in the selected direction(s) of the selected tooth/teeth in the lateral cephalometric radiograph and the registration result.

In some embodiments, the patient's maxillary and mandibular dentitions in the lateral cephalometric radiograph may be under the initial tooth arrangement.

In some embodiments, a training data set for training the first deep neural network may comprise a plurality of groups of training data, each group of training data comprises one lateral cephalometric radiograph and a target position(s) in the selected direction(s) of the selected tooth/teeth of a first dentition in the lateral cephalometric radiograph.

In some embodiments, the target position(s) in the selected direction(s) of the selected tooth/teeth may comprise one of the following: a target position in sagittal direction of an anterior tooth, a target position in vertical direction of an anterior tooth, a target position in vertical direction of a posterior tooth, a target position in sagittal direction of a posterior tooth, and any combination of the above.

In another aspect, the present application provides a computer-implemented method for generating a digital data set representing a target tooth arrangement based on the target position(s) in the selected direction(s) of the selected tooth/teeth, the method comprises: preliminarily aligning the first dentition of the first 3D digital model using a trained second deep neural network; and performing a first optimization on the preliminarily aligned first dentition, where the first optimization comprises: moving the selected tooth/teeth in the preliminarily aligned first dentition to the target position(s) in the selected direction(s).

In some embodiments, the first optimization may further comprise: optimizing the dental arch curve of the first dentition, and eliminating collision and/or closing diastema in the first dentition.

In some embodiments, the moving the selected tooth in first dentition model to the target position in the selected direction may be performed simultaneously with the optimization of the dental arch curve of the first dentition model and the collision release and/or gap closure.

In some embodiments, in the optimization of the dental arch curve, the pose(s) of the selected tooth/teeth may remain unchanged after the selected tooth/teeth is/are moved to the target position(s) in the selected direction(s).

In some embodiments, the method for generating a digital data set representing a target tooth arrangement may further comprise: preliminarily aligning a second dentition of the first 3D digital model using a trained third deep neural network based on the first dentition which has undergone the first optimization, where the second dentition is opposite to the first dentition; performing a second optimization on the preliminarily aligned second dentition, where the second optimization comprises: performing an occlusal optimization on the preliminarily aligned second dentition based on the first dentition which has undergone the first optimization, so that the occlusal relationship between the second dentition which has undergone the second optimization and the first dentition which has undergone the first optimization meets requirements.

In some embodiments, while the occlusal optimization is performed, elimination of collision and/or closure of diastema may be performed on the preliminarily aligned second dentition.

In some embodiments, the occlusal optimization may be based on an energy function of occlusal relationship, and the occlusal relationship may be defined according to positional relationships between selected key points of the teeth.

In some embodiments, the method for generating a digital data set representing a target tooth arrangement may further comprise: further aligning the first dentition which has undergone the first optimization and the second dentition which has undergone the second optimization using a trained fourth deep neural network.

In some embodiments, the first dentition may be the maxillary dentition, and the second dentition may be the mandibular dentition.

### BRIEF DESCRIPTION OF THE DRAWINGS

The above and other features of the present application will be further illustrated below with reference to figures and their detailed description. It should be appreciated that these figures only show several exemplary embodiments according to the present application, so they should not be construed as limiting the scope of the present application. Unless otherwise specified, the figures are not necessarily drawn to scale, and similar reference numbers therein denote similar components.
FIG. 1 illustrates a schematic flow chart of a method for generating a digital data set representing a target tooth arrangement according to one embodiment of the present application;
FIG. 2 schematically illustrates a basic structure of a first deep neural network according to one embodiment of the present application;
FIG. 3 illustrates a schematic flow chart of a method for generating constraints for aligning teeth according to one embodiment of the present application;
FIG. 4 schematically illustrates a target position of a maxillary anterior tooth (including a sagittal-direction target position and a vertical-direction target position) and a target position of a maxillary posterior tooth in vertical direction on a lateral cephalometric radiograph predicted by a fifth deep neural network in an example; and
FIG. 5 illustrates a schematic block diagram of a computer program for generating a collision elimination and diastema closure plan according to one embodiment of the present application.

### DETAILED DESCRIPTION OF ILLUSTRATED EMBODIMENTS

In the following detailed description, reference is made to the accompanying drawings, which form a part thereof. Exemplary embodiments in the detailed description and figures are only intended for illustration purpose and not meant to be limiting. Inspired by the present application, those skilled in the art can understand that other embodiments may be utilized and other changes may be made, without departing from the spirit or scope of the present application. It will be readily understood that aspects of the present application described and illustrated herein can be arranged, replaced, combined, separated and designed in a wide variety of different configurations, all of which are explicitly contemplated and make part of the present application.

One aspect of the present application provides a computer-implemented method for generating a digital data set representing a target tooth arrangement. The method combines alignment of teeth using a deep neural network with optimization based on preset constraints, which exhibits wide applicability, and a result generated by the method meets clinical requirements and dental professionals' specific requirements (if any) for an orthodontic treatment of a specific case.

A target tooth arrangement refers to a tooth arrangement to be achieved by an orthodontic treatment. It is understood that the target tooth arrangement might vary with different patients.

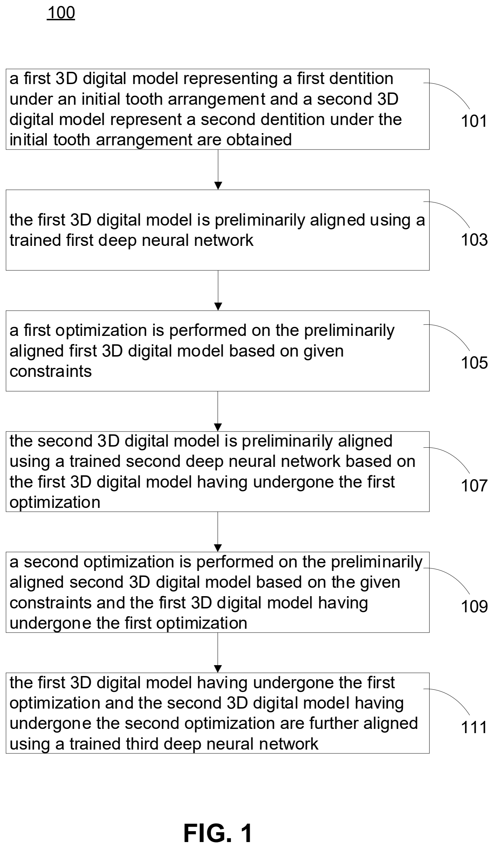

Please refer to FIG. 1, it illustrates a schematic flow chart of a computer-implemented method 100 for generating a digital data set representing a target tooth arrangement according to one embodiment of the present application.

In 101, a first 3D digital model representing a first dentition under an initial tooth arrangement and a second 3D digital model representing a second dentition under the initial tooth arrangement are obtained.

The first dentition may be the patient's maxillary dentition or mandibular dentition, and the second dentition is the opposite dentition of the first dentition.

The initial tooth arrangement is a tooth arrangement based on which the digital data set representing the target tooth arrangement is generated by the method according to the present application. For example, the initial tooth arrangement may be either the patient's tooth arrangement before the orthodontic treatment, or the patient's tooth arrangement at any time during an orthodontic treatment (a new treatment plan needs to be made during the orthodontic treatment).

The first and second 3D digital models are segmented 3D digital models, i.e., the teeth are independent from each other, and the teeth can be moved separately.

In one embodiment, a 3D digital model representing a patients' dentition under an initial tooth arrangement may be obtained by directly scanning the patient's jaw. In another embodiment, the 3D digital model representing the patient's dentition under the initial tooth arrangement may be obtained by scanning a physical model of the patient's jaw, for example, a plaster model. In yet another embodiment, the 3D digital model representing the patient's dentition under the initial tooth arrangement may be obtained by scanning an impression of the patient's jaw.

In 103, the first 3D digital model is preliminarily aligned using a trained first deep neutral network.

In one embodiment, the first 3D digital model is input into the trained first deep neural network which preliminarily aligns the first 3D digital model, and outputs rotation matrices and translation matrices of the teeth. The preliminarily aligned first 3D digital model is obtained by applying the rotation matrices and translation matrices on the first 3D digital model.

In one embodiment, a training data set for training the first deep neural network may comprise a plurality of groups of training data. In the case where the first dentition is the maxillary dentition, each group of training data comprises a 3D digital model of a maxillary dentition which is not aligned and a 3D digital model of the maxillary dentition which is aligned.

In one embodiment, the first deep neural network may be a deep neural network based on transformer.

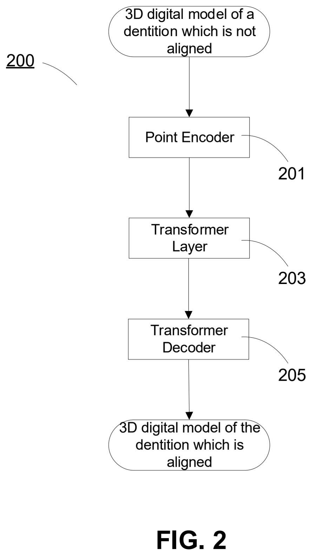

Please refer to FIG. 2, it schematically illustrates a basic structure of a first deep neural network 200 according to one embodiment of the present application.

First deep neural network 200 comprises a point encoder 201, a transformer layer 203 and a transformer decoder 205.

Before being input into first deep neural network 200, the first 3D digital model is first converted into a point cloud.

Point encoder 201 encodes a single tooth and a neighboring area of the single tooth selected by point encoder 201 to generate an embedding (also called a feature vector) of the single tooth. In one embodiment, point encoder 201 may encode based on 3D coordinates and normal vectors of points.

Transformer layer 203 fuses the embeddings of the teeth of the first dentition to generate the embeddings of the teeth of the preliminarily aligned first dentition.

Transform decoder 205 converts the embeddings of the teeth of the preliminarily aligned first dentition into rotation matrices and translation matrices. The rotation matrix and translation matrix corresponding to each tooth represent a difference between an initial pose (including position and orientation) of the tooth and a pose of the tooth after the preliminary alignment. These rotation matrices and translation matrices are applied to corresponding teeth of the first 3D digital model, to obtain the preliminarily aligned first 3D digital model.

Inspired by the present application, it is understood that the first deep neural network may be any other suitable neural network besides the above network structure.

In one preferred embodiment, the first dentition is the maxillary dentition. Inspired by the present application, it is understood that the first dentition may also be the mandibular dentition.

In 105, a first optimization is performed on the preliminarily aligned first 3D digital model based on predetermined constraints.

Before an orthodontic treatment plan is made, some parameters of the target of the orthodontic treatment can be determined based on specific situation of a patient's teeth, e.g., a target position(s) in a selected direction(s) of a selected tooth/teeth, a plan of collision elimination and/or diastema closure, and a plan of interproximal reduction and space reservation obtained based on an analysis of widths of the teeth.

In one embodiment, the target position(s) in the selected direction(s) of the selected tooth/teeth may comprise one of the following: a target position of midline, a target position in sagittal direction of an anterior tooth, a target position in vertical direction of an anterior tooth, a target position in sagittal direction of a posterior tooth, a target position in horizontal direction of a posterior tooth, a target position in horizontal direction of a canine, and a target position in vertical direction of a posterior tooth.

In one embodiment, a corresponding operation is performed on the preliminarily aligned first 3D digital model according to the target position(s) in the selection direction(s) of the selected tooth/teeth of the first dentition in the constraints, i.e., the pose(s) of the selected tooth/teeth of the preliminarily aligned first 3D digital model is/are repositioned to the target position(s).

In one embodiment, a target position of midline may be achieved by adjusting positions of anterior teeth in mesial-distal direction.

Moving the pre-selected tooth/teeth of the preliminarily aligned first 3D digital model to the target position(s) in the pre-selected direction(s) might cause the dental arch curve of the first 3D digital model to be not smooth enough. In one embodiment, the dental arch curve may be optimized whilst the pre-selected tooth/teeth is/are moved to the target position(s) in the pre-selected direction(s).

In one embodiment, an initial dental arch curve may be fitted based on the preliminarily aligned first 3D digital model, and the optimization may be based on the initial dental arch curve.

A method for fitting a dental arch curve, and the feature points used therein are known in the art. For example, a dental arch curve may be fitted using a spline curve or a polynomial function. For example, a dental arch curve may be fitted using FA points of teeth, or cusps of molars, cusps of canines and midpoints of central incisors as the feature points.

In one embodiment, the pre-selected teeth may be moved one by one to their target positions in the pre-selected directions, or the plurality of pre-selected teeth may be moved simultaneously to their target positions in the pre-selected directions.

In one embodiment, as for the selected teeth that have already been moved to their target positions in the pre-selected directions, their feature points are taken as control points. During the optimization of the dental arch curve, the positions of these control points remain unchanged so that the optimization of the dental arch curve will not change the poses of these teeth, thereby preventing the poses of these teeth from deviating from the target positions in the selected directions.

In one embodiment, while optimization of the dental arch curve is performed on the first 3D digital model, collision elimination and/or diastema closure may be performed on the first 3D digital model so that the first 3D digital model having undergone the first optimization meets requirements on collision and diastema. If the constraints comprise a plan of collision elimination and/or diastema closure for the first dentition, the collision elimination and/or diastema closure are (is) performed according to the plan.

A plan of collision elimination and/or diastema closure may comprise one of the following: tooth extraction, dental implantation, arch expansion, arch constriction, distalization of posterior teeth, mesialization of posterior teeth, proclination, retraction of anterior teeth, interproximal reduction, space reservation and any combination of the above.

In one embodiment, a plan of collision elimination and/or diastema closure may only designate which means will be used, and needn't to designate specific parameters for these means.

If the constraints comprise a plan of interproximal reduction and/or space reservation obtained based on an analysis of widths of teeth, the requirements of collision elimination and/or diastema closure may be determined based on the plan of interproximal reduction and/or space reservation, and collision elimination and/or diastema closure may be performed on the first 3D digital model according to these requirements.

In one embodiment, an interproximal reduction amount may be represented by an allowable collision amount, and a space reservation amount may be represented by an allowable diastema amount. As such, the first 3D digital model needn't to be modified before the collision elimination and/or diastema closure is performed on the first 3D digital model.

In another embodiment, before the collision elimination and/or diastema closure are (is) performed on the first 3D digital model, the first 3D digital model may also be modified according to the plan of interproximal reduction and/or space reservation. For example, the interproximal reduction may be performed on corresponding tooth/teeth according to specified interproximal reduction amount(s), a false denture may be added according to the amount of space reservation, and then the collision elimination and/or diastema closure may be performed on the modified first 3D digital model. It should be noted that the above two plans both determine the requirements of collision elimination and/or diastema closure according to the plan of interproximal reduction and/or space reservation plan, and perform the collision elimination and/or diastema closure on the first 3D digital model according to these requirements.

In yet another embodiment, the pre-selected teeth may be moved to the target positions in the pre-selected directions first, and then the optimization of the dental arch curve and the collision elimination and/or diastema closure may be performed.

The first 3D digital model having undergone the first optimization is obtained after moving the pre-selected teeth of the preliminarily-aligned first 3D digital model to the target positions in the pre-selected directions, and performing dental arch curve optimization and collision elimination and/or diastema closure on the first 3D digital model. At this point, the first 3D digital model having undergone the first optimization meets aesthetic requirements, clinical requirements and dental professionals' specific requirements (if any) for the orthodontic treatment of the patient.

Then, the second 3D digital model may be aligned based on the first 3D digital model having undergone the first optimization.

In 107, the second 3D digital model is preliminarily aligned using a trained second deep neural network, based on the first 3D digital model having undergone the first optimization.

The first 3D digital model having undergone the first optimization and the second 3D digital model are input into the trained second deep neural network. The trained second deep neural network, preliminarily aligns the second 3D digital model with the first 3D digital model having undergone the first optimization as reference, and outputs the preliminarily-aligned second 3D digital model.

In one embodiment, the second deep neural network may use the same structure as the first deep neural network. Inspired by the present application, it is understood that the second deep neural network may be any other suitable deep neural network.

Different from the first deep neural network, the input to the second deep neural network comprises the 3D digital model of the aligned first dentition and the 3D digital model of the non-aligned second dentition. In the preliminary alignment of the second 3D digital model, not only positional relationships between teeth of the second dentition are considered, but also positional relationships between the teeth of the second dentition and teeth of the first dentition.

In one embodiment, a training data set for training the second deep neural network may comprise a plurality of groups of training data. Under the circumstance that the first dentition is the maxillary dentition, each group of training data comprises an aligned 3D digital model of a maxillary dentition, a non-aligned 3D digital model of a mandibular dentition, and an aligned 3D digital model of the mandibular dentition.

In 109, a second optimization is performed on the preliminarily aligned second 3D digital model based on the predetermined constraints and the first 3D digital model having undergone the first optimization.

The occlusal relationship between the first 3D digital model having undergone the first optimization and the preliminarily-aligned second 3D digital model might not meet requirements.

Therefore, with the reference of the first 3D digital model having undergone the first optimization, occlusion optimization may be performed on the preliminarily aligned second 3D digital model, to make the optimized occlusal relationship between the maxillary and mandibular teeth normal.

In one embodiment, an energy function may be defined according to the occlusal relationship between the maxillary and mandibular teeth, and then the overall position and poses of corresponding teeth of the updated second 3D digital model may be optimized using an optimization algorithm.

In one embodiment, the occlusal relationship between the maxillary and mandibular teeth may be defined based on positional relationships between key points on corresponding teeth, for example, cusps and central grooves.

It is understood that the energy function based optimization may use any suitable optimization algorithm, such as second-order Newton optimization algorithm, numerical optimization algorithm, and stochastic gradient descent optimization algorithm etc.

In one embodiment, if the constraints comprise a plan of collision elimination and/or diastema closure for the second dentition, the collision elimination and/or diastema closure may be performed on the preliminarily-aligned second 3D digital model according to the plan of collision elimination and/or diastema closure during the occlusal optimization, so that the second 3D digital model having undergone the second optimization meets requirements on collision and diastema.

The plan of collision elimination and/or diastema closure may comprise one of the following: tooth extraction, dental implantation, arch expansion, arch constriction, distalization of posterior teeth, mesialization of posterior teeth, proclination, retraction of an anterior tooth, interproximal reduction, space reservation and any combination of the above.

For some special cases, the occlusal relationship to be achieved is different from a standard occlusal relationship. For example, for a patient having overbite and overjet, it is desired to correct the occlusion to overbite rather than normal occlusion. In this case, the constraints may comprise this special occlusal relationship provided by the dental professional so that the occlusal optimization may be performed according to this occlusal relationship.

If the constraints comprise a plan of interproximal reduction and/or space reservation obtained based on an analysis of widths of the teeth, the requirements on collision elimination and/or diastema closure may be determined based on the plan of interproximal reduction and/or space reservation. Similarly, in one embodiment, an interproximal reduction amount may represent an allowable collision amount, and a space reservation amount may represent an allowable diastema amount. The collision elimination and/or diastema closure are (is) performed on the second 3D digital model according to the requirements.

At this point, the first 3D digital model having undergone the first optimization and the second 3D digital model having undergone the second optimization might still not fully comply with statistics of aligned dentitions. Therefore, the optimized first and second 3D digital models may be further aligned using a trained third deep neural network to make them more comply with the statics of aligned dentitions.

In 111, the first 3D digital model having undergone the first optimization and the second 3D digital model having undergone the second optimization may be further aligned using the trained third deep neural network.

The first 3D digital model having undergone the first optimization and the second 3D digital model having undergone the second optimization are input into the trained third deep neural network. The trained third deep neural network further aligns the first and second 3D digital models, and outputs further aligned first and second 3D digital models, i.e., the target of the orthodontic treatment plan.

Inspired by the present application, it is understood that based on different network designs, the third deep neural network may output a 3D digital model, or translation matrices and rotation matrices of the teeth, or target poses of the teeth, each of which may be referred to as the digital data set representing the target tooth arrangement. Similarly, the first and second deep neural networks may also, based on different network designs, output a 3D digital model of a dentition, or translation matrices and rotation matrices, or poses of the teeth of the dentition.

In one embodiment, the third deep neural network may use the same structure as the first deep neural network. Inspired by the present application, it is understood that the third deep neural network may be any other suitable deep neural network.

In one embodiment, the training data set for training the third deep neural network may comprise a plurality of groups of training data, each group of training data may comprise 3D digital models of non-aligned maxillary and mandibular dentitions, and 3D digital models of aligned maxillary and mandibular dentitions.

Another aspect of the present application provides a computer-implemented method for generating the constraints.

In one embodiment, the constraints may be generated based on the 3D digital model representing the patient's initial tooth arrangement, a frontal view photograph of the patient's teeth, and a lateral cephalometric radiograph of the patient.

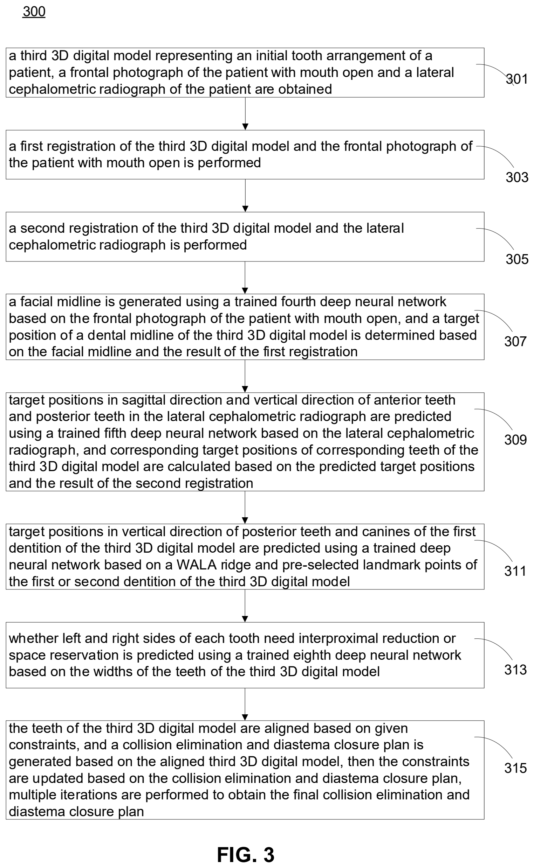

Please refer to FIG. 3, it illustrates a schematic flow chart of a computer-implemented method 300 for generating constraints on alignment of teeth according to one embodiment of the present application.

In 301, a third 3D digital model representing the patient's initial tooth arrangement, a frontal photograph of the patient with mouth open, and a lateral cephalometric radiograph of the patient are obtained.

Methods for obtaining the third 3D digital model representing the patient's initial tooth arrangement, the frontal photograph of the patient with mouth open, and the lateral cephalometric radiograph of the patient are well known in the art and will not described in detail any more here.

The frontal photograph of the patient with mouth open is a photograph taken from the front of the patient with the mouth open and teeth exposed, and a typical example is the patient's frontal smile photo.

In one embodiment, the third 3D digital model comprises the maxillary and mandibular dentitions in occlusal state, i.e., it comprises the first and second 3D digital models in occlusal state.

In 303, a first registration of the third 3D digital model and the frontal photograph of the patient with mouth open is performed.

In one embodiment, the registration of the third 3D digital model and the frontal extraoral photograph may use a simple size matching method.

In some cases, the frontal photograph of the patient with mouth open might be tilted. Therefore, in one embodiment, the frontal photograph of the patient with mouth open may be adjusted using a trained deep neural network to make it horizontal.

In one embodiment, a training data set for training the deep neural network comprises a plurality of groups of training data, each group of training data comprises an original frontal photograph of a patient with mouth open and an angle it needs to be rotated to make it horizontal.

In one embodiment, the third 3D digital model may be projected in a front-rear direction, and then frontal photograph of the patient with mouth open may be scaled to make the teeth in the photograph overlap corresponding teeth in the projection. After the registration, a physical size of the photograph may be obtained with the third 3D digital model as reference.

Inspired by the present application, it is understood that besides the size-matching method, the registration of the third 3D digital model and the frontal extraoral photograph may also use any other suitable method.

In 305, a second registration of the third 3D digital model and the lateral cephalometric radiograph is performed.

The registration of the third 3D digital model and the lateral cephalometric radiograph may be regarded as a process of searching for intrinsic and extrinsic camera parameters, i.e., finding a set of intrinsic and extrinsic camera parameters from a parameter space. There is a maximum matching degree between the projections of pre-selected key points on the third 3D digital model and the corresponding key points in the lateral cephalometric radiograph, based on the set of intrinsic and extrinsic camera parameters.

In one embodiment, the registration may use a method such as a PnP (Perspective-n-Point) algorithm or an iterative optimization method.

After the registration, the physical size of the lateral cephalometric radiograph is obtained with the third 3D digital model as reference.

In 307, a facial midline is generated using a trained fourth deep neural network based on the frontal photograph of the patient with mouth open, and a target position of the dental midline is determined based on the position of the facial midline and the result of the first registration.

In one embodiment, the position of the facial mid-line along horizontal direction needs to be determined only.

In one embodiment, a heat map may be generated using the fourth deep neural network based on the frontal photograph of the patient with mouth open, and then the heat map is post-processed to obtain the position of the facial midline. In the heat map, the key point for generating the facial midline has the highest value. In one example, in the heat map, the tip of the nose has the highest value, and the facial midline is obtained by drawing a vertical line through the tip of the nose.

In one embodiment, the training data set for training the fourth deep neural network comprises a plurality of groups of training data, each group of training data comprises one frontal photograph of a patient with mouth open and the position of the facial midline of the frontal photograph of the patient with mouth open.

In one embodiment, the fourth deep neural network may be HRNet. Inspired by the present application, it is understood that besides HRNet, the fourth deep neural network may be any other suitable deep neural network.

Inspired by the present application, it is understood that besides deep neural network, the facial midline may also be generated by a machine learning based regression method based on the frontal photograph of the patient with mouth open.

In another embodiment, the position of the facial midline may be directly predicted using the fourth deep neural network based on the frontal photograph of the patient with mouth open, and need not to convert the frontal photograph of the patient with mouth open to the heat map. For example, the position of the tip of the nose in the frontal photograph of the patient with mouth open may be determined using the fourth deep neural network, and a straight line passing through the tip of the nose is drawn in a direction perpendicular to horizontal direction to obtain the facial midline.

After the facial midline is obtained, the target position of the dental midline of the third 3D digital model may be determined based on the result of the first registration.

In 309, target positions in sagittal direction of anterior teeth, target positions in vertical direction of anterior teeth, target positions in sagittal direction of posterior teeth and target positions in vertical direction of posterior teeth in the lateral cephalometric radiograph are predicted using a trained fifth deep neural network based on the lateral cephalometric radiograph, and the target positions in sagittal direction of the anterior teeth, the target positions in vertical directions of the anterior teeth, the target positions in sagittal direction of the posterior teeth and the target positions in vertical direction of the posterior teeth in the third 3D digital model are calculated based on the result of the second registration and the predicted target positions.

In one embodiment, the fifth deep neural network may be a HRNet. Inspired by the present application, it is understood that besides HRNet, the fifth deep neural network may be any other suitable deep neural network.

In one embodiment, a training data set for training the fifth deep neural network may comprise a plurality of groups of training data, each group of training data comprises one lateral cephalometric radiograph not marked with the above target positions, and one lateral cephalometric radiograph marked with the above target positions.

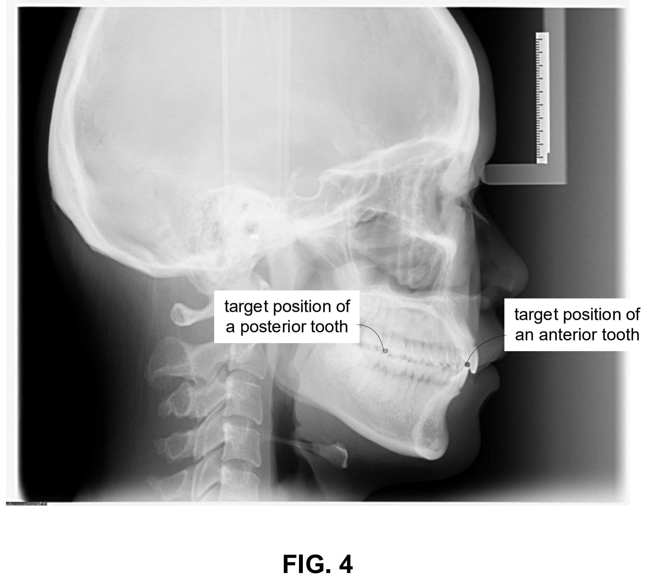

Please refer to FIG. 4, it illustrates a lateral cephalometric radiograph with target positions (including target positions in sagittal direction and target positions in vertical direction) of maxillary anterior teeth (tooth No. 11 and tooth No. 21) and target positions in vertical direction of maxillary posterior teeth (tooth No. 16 and tooth No. 26) predicted by the fifth deep neural network in one example.

Since a lateral cephalometric radiograph includes not only teeth but also other tissues, in the training of the fifth deep neural network, it learns not only positional relationships between teeth but also positional relationships between teeth and other corresponding tissues so that the above predicted target positions meet medical requirements better.

In 311, target positions in horizontal direction of posterior teeth are predicted using a trained sixth deep neural network based on a WALA ridge and corresponding landmark points of the first or second 3D digital model.

It should be noted that horizontal direction in the present application refers to left-right direction of a patient's jaw.

In one embodiment, the WALA ridge and pre-selected landmark points such as FA points and cusps of teeth of the first or second 3D digital model may be marked using a trained seventh deep neural network.

In one embodiment, the seventh deep neural network may be Point Transformer network. Inspired by the present application, it is understood that besides Point Transformer network, the seventh deep neural network may also be any other suitable network.

Then, the WALA ridge and landmark points are input into the sixth deep neural network to obtain the target positions in horizontal direction of the posterior teeth.

In one embodiment, the sixth deep neural network may be HRNet. Inspired by the present application, it is understood that besides HRNet, the sixth deep neural network may be any other suitable deep neural network.

In one embodiment, a training data set for training the sixth deep neural network may be extracted from existing orthodontic treatment cases.

In one embodiment, the target positions in horizontal direction of the posterior teeth and/or canines of the first dentition may be predicted using the sixth deep neural network based on the WALA ridge and selected landmark points of the teeth of the first 3D digital model.

In another embodiment, the target positions in horizontal direction of the posterior teeth of the second dentition may be predicted using the sixth deep neural network based on the WALA ridge and selected landmark points of the teeth of the second 3D digital model, and then the target positions in horizontal direction of the posterior teeth of the first dentition may be calculated according to normal occlusal relationship.

According to clinical experiences, the lower jaw is usually stable. Therefore, if the first dentition is the maxillary dentition, a preferred embodiment is predicting the target positions in horizontal direction of posterior teeth of the second dentition using the sixth deep neural network based on the WALA ridge and selected landmark points of the teeth of the second 3D digital model, and then calculating the target positions in horizontal direction of posterior teeth of the first dentition.

In one embodiment, target positions in sagittal direction of anterior teeth, target positions in vertical direction of anterior teeth, target positions in vertical direction of posterior teeth and target positions in horizontal direction of posterior teeth may be represented using positions of corresponding landmark points of the teeth.

In 313, whether left and right sides of each tooth need interproximal reduction or space reservation is predicted using a trained eighth deep neural network based on the width of each tooth of the third 3D digital model.

In an orthodontic treatment, in addition to the poses of the teeth, a ratio of the width of maxillary teeth to the width of mandibular teeth, i.e., the Bolton index, needs to be considered. For example, a ratio of the sum of widths of crowns of the maxillary anterior teeth to the sum of widths of crowns of the mandibular anterior teeth, and a ratio of the sum of widths of crowns of all teeth of the upper jaw to the sum of widths of crowns of all teeth of the lower jaw. Whether the maxillary and mandibular dentitions have imbalanced crown widths can be determined based on the Bolton index.

The eighth deep neural network is substantively a network for optimizing Bolton index.

The width and number of each tooth in the third 3D digital model are input into the eighth deep neural network, to obtain interproximal reduction amounts and space reservation amounts on left and right sides of each tooth.

In one embodiment, for a too small tooth, it is not suggested to perform interproximal reduction on a tooth on an opposite jaw to obtain a ratio of widths of teeth that meets the requirement. At this point, a space may be reserved on both sides of the tooth, it is like artificially increased width of the tooth.

In one embodiment, the width of a tooth in the third 3D digital model may be a maximum width of the tooth along the Y-axis (a coordinate axis, the included angle between which axis and the mesial-distal direction is minimum) of a local coordinate system of the tooth.

In one embodiment, the sixth deep neural network may be Transformer. Inspired by the present application, it is understood that besides Transformer, the sixth deep neural network may be any other suitable deep neural network such as CNN (Convolutional Neural Network) or RNN (Recurrent Neural Network).

The training data set of the eighth deep neural network comprises a plurality of groups of training data, each group of training data comprises numbers and widths of all teeth in an existing case and the interproximal reduction amounts and/or space reservation amounts of all teeth provided for optimization with respect to the Bolton index in an orthodontic treatment plan for the case. It should be noted that the training data set of the eighth deep neural network may comprise interproximal reduction and space reservation plans manually designed by dental professionals based on specific situations of actual cases, and part of these plans might not strictly comply with the standard Bolton index.

At this point, the target positions of pre-selected teeth in the pre-selected directions, and the interproximal reduction amounts or space reservation amounts for the requirement on the ratio between widths of the maxillary and mandibular teeth have been obtained. However, there still lacks collision elimination and diastema closure plan.

In 315, the teeth of the third 3D digital model are aligned based on the already-obtained constraints, a collision elimination and diastema closure plan is generated based on the aligned third 3D digital model, the constraints are updated based on the generated collision elimination and diastema closure plan, and a final collision elimination and diastema closure plan is obtained after multiple iterations.

Means of collision elimination and diastema closure may include but not limited to: tooth extraction, dental implantation, interproximal reduction, space reservation, distalization of molars, mesialization of molars, arch expansion, arch constriction, proclination, anterior teeth retraction, etc.

In one embodiment, the method for aligning teeth used in generating the collision elimination and diastema closure plan may be method 100 for generating a digital data set representing a target tooth arrangement described above. Inspired by the present application, it is understood that besides the above method, any other suitable method for aligning teeth may be used.

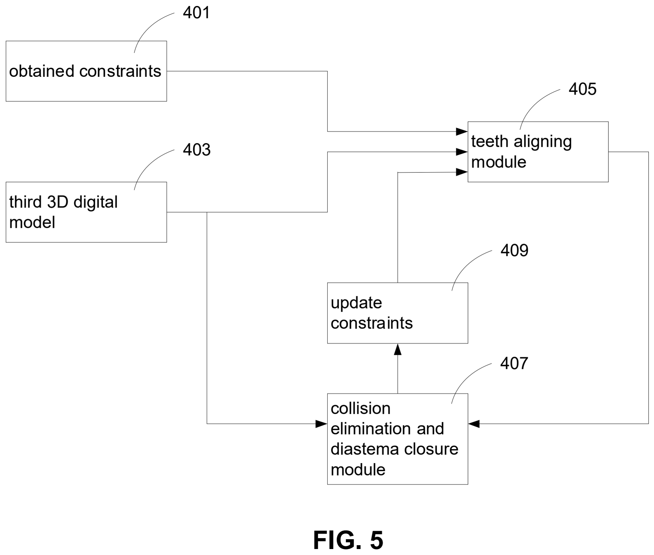

Please refer to FIG. 5, it schematically illustrates a block diagram of a computer program for generating a collision elimination and diastema closure plan according to one embodiment of the present application.

The obtained constraints 401 and the third 3D digital model are input into a teeth aligning module 405. The teeth aligning module 405 generates a teeth aligning plan (i.e., the aligned third 3D digital model), and outputs it to a collision elimination and diastema closure module 407. Since the constraints does not include collision elimination and diastema closure plan at this point, collision elimination and diastema closure may not be performed on the first teeth alignment.

In one embodiment, teeth aligning module 405 may be a computer program which when executed will cause a computer to implement method 100 for generating a digital data set representing a target tooth arrangement.

Collision elimination and diastema closure module 407 generates a collision elimination and diastema closure plan based on the initial third 3D digital model and the aligned third 3D digital model. The collision elimination and diastema closure plan generated for the first time might not be sound, i.e., teeth alignment may be performed again based on the obtained constraints and the collision elimination and diastema closure plan, and the collision amounts and the diastema amounts in the obtained teeth alignment result might not meet requirements, or might be greater than a predetermined collision threshold and a predetermined diastema threshold. Therefore, the current constraints may be updated based on the current collision elimination and diastema closure plan, teeth alignment may be performed based on the updated constraints, a new collision elimination and diastema closure plan may be generated, and iteration may be performed multiple times until the collision amounts and diastema amounts in the obtained teeth alignment result meet the requirements.

In one embodiment, a number of iterations N may be preset, iteration will be stopped after having been performed N times, and the collision elimination and diastema closure plan output by the last iteration is taken as a final result. In another embodiment, a collision amount threshold and a diastema amount threshold may also be preset. The iteration stops when the collision amounts and diastema amounts in the teeth alignment result obtained from the iterations converge to be less than the collision amount threshold and diastema amount threshold, and the collision elimination and diastema closure plan output by the last iteration is taken as the final result.

In one embodiment, the collision elimination and diastema closure plan may be generated using a trained ninth deep neural network based on the initial third 3D digital model and the third 3D digital model aligned based on the current constraints.

In one embodiment, the ninth deep neural network may comprise an encoder and a decoder. The encoder is used to encode the initial third 3D digital model and the aligned third 3D digital model. The decoder generates the collision elimination and diastema closure plan based on data output by the encoder. In one embodiment, the encoder may be Point Transformer, and the decoder may be RNN. Inspired by the present application, it is understood that besides the above network structure, the ninth deep neural network may be any other suitable network.

In one embodiment, a training data set of the ninth deep neural network may comprise a plurality of groups of training data, each group of training data comprises a 3D digital model of a non-aligned jaw, a 3D digital model of the aligned jaw and a corresponding collision elimination and diastema closure plan.

In one embodiment, in addition to deep neural network, a computer may also generate a collision elimination and diastema closure plan according to preset rules based on the initial third 3D digital model and the aligned third 3D digital model.

In fact, there are already many types of rules for collision elimination and diastema closure, and different doctors might use different rules. Therefore, these rules will not be described in detail herein.

While various aspects and embodiments have been disclosed herein, other aspects and embodiments will be apparent to those skilled in the art, inspired by the present application. The various aspects and embodiments disclosed herein are for illustration only and are not intended to be limiting, and the scope and spirit of the present application shall be defined by the following claims.

Likewise, the various diagrams may depict exemplary architectures or other configurations of the disclosed methods and systems, which are helpful for understanding the features and functions that can be included in the disclosed methods and systems. The claimed invention is not restricted to the illustrated exemplary architectures or configurations, and desired features can be achieved using a variety of alternative architectures and configurations. Additionally, with regard to flow diagrams, functional descriptions and method claims, the order in which the blocks are presented herein shall not mandate that various embodiments of the functions shall be implemented in the same order unless otherwise the context specifies.

Unless otherwise specifically specified, terms and phrases and their variants used herein are generally intended as "open" terms instead of limiting. In some embodiments, use of phrases such as "one or more", "at least" and "but not limited to" should not be construed to imply that the parts of the present application that do not use similar phrases intend to be limiting.

## Claims

1. A computer implemented method for generating a target position(s) in a selected direction(s) of a selected tooth/teeth, where the method comprises:
obtaining a first 3D digital model representing a patient's maxillary and mandibular dentitions under an initial tooth arrangement;
obtaining a lateral cephalometric radiograph of the patient;
registering the first 3D digital model with the lateral cephalometric radiograph;
predicting a target position(s) in a selected direction(s) of a selected tooth/teeth of a first dentition in the lateral cephalometric radiograph using a trained first deep neural network, where the first dentition is the maxillary dentition or the mandibular dentition; and
generating a target position(s) in the selected direction(s) of the selected tooth/teeth of the first dentition in the first 3D digital model based on the target position(s) in the selected direction(s) of the selected tooth/teeth of the first dentition in the lateral cephalometric radiograph and the registration result.

2. The method of claim 1, wherein the patient's maxillary and mandibular dentitions in the lateral cephalometric radiograph are under the initial tooth arrangement.

3. The method of claim 1, wherein a training data set for training the first deep neural network comprises a plurality of groups of training data, where each group of training data comprises one lateral cephalometric radiograph and a target position(s) in the selected direction(s) of the selected tooth/teeth of the first dentition in the lateral cephalometric radiograph.

4. The method of claim 1, wherein the target position(s) in the selected direction(s) of the selected tooth/teeth comprises one of the following: a target position in sagittal direction of an anterior tooth, a target position in vertical direction of an anterior tooth, a target position in vertical direction of a posterior tooth, a target position in sagittal direction of a posterior tooth, and any combination thereof.

5. A computer implemented method for generating a digital data set representing a target tooth arrangement based on the target position(s) in the selected direction(s) of the selected tooth/teeth generated by the method of claim 1, where the method comprises:
preliminarily aligning the first dentition of the first 3D digital model using a trained second deep neural network; and
performing a first optimization on the preliminarily aligned first dentition, where the first optimization comprises: moving the selected tooth/teeth in the preliminarily aligned first dentition to the target position(s) in the selected direction(s).

6. The method of claim 5, wherein the first optimization further comprises: optimizing a dental arch curve of the first dentition, and performing collision elimination and/or diastema closure on the first dentition.

7. The method of claim 6, wherein the movement of the selected tooth/teeth of the first dentition to the target position(s) in the selected direction(s), the optimization of the dental arch curve of the first dentition, and the collision elimination and/or diastema closure are performed at the same time.

8. The method of claim 6, wherein after the selected tooth/teeth is/are moved to the target position(s) in the selected direction(s), the pose(s) of the selected tooth/teeth remains unchanged in the optimization of the dental arch curve.

9. The method of claim 5 further comprising:
preliminarily aligning a second dentition of the first 3D digital model using a trained third deep neural network based on the first dentition model having undergone the first optimization, where the second dentition is opposite to the first dentition;
performing a second optimization on the preliminarily aligned second dentition, where the second optimization comprises: performing an occlusal optimization on the preliminarily aligned second dentition based on the first dentition having undergone the first optimization, so that the occlusal relationship between the second dentition having undergone the second optimization and the first dentition having undergone the first optimization meets requirements.

10. The method of claim 9, wherein while the occlusal optimization is performed, collision elimination and/or diastema closure are/is performed on the second dentition.

11. The method of claim 9, wherein the occlusal optimization is based on an energy function of occlusal relationship, and occlusal relationship is defined based on positional relationships between selected landmark points of the teeth.

12. The method of claim 9 further comprising: further aligning the first dentition having undergone the first optimization and the second dentition having undergone the second optimization using a trained fourth deep neural network.

13. The method of claim 9, wherein the first dentition is the maxillary dentition, and the second dentition is the mandibular dentition.
